# FASCICULE DE BREVET EUROPEEN

(11) **EP 3 331 377 B1**
(45) Date de publication et mention de la délivrance du brevet: **22.05.2019**
(21) Numéro de dépôt: 16763898.0
(22) Date de dépôt: 08.08.2016
(51) Int. Cl.: A23L 2/52, A23L 2/66

(54) **COMPOSITION NUTRITIONNELLE HYPERENERGETIQUE ET ENRICHIE EN PROTEINES**
HOCHENERGETISCHE UND PROTEINANGEREICHERTE ERNÄHRUNGSZUSAMMENSETZUNG
HIGH-ENERGY AND PROTEIN-ENRICHED NUTRITIONAL COMPOSITION

(30) Priorité: 07.08.2015 FR 1557603
(43) Date de publication de la demande: 13.06.2018
(73) Titulaire: Even Santé Industrie, 29260 Lesneven (FR)
(72) Inventeur: LE FUR, Audrey, 29860 Bourg Blanc (FR); LE PALUD, Jean-Marc, 29860 Plabennec (FR); FOSSEUX, Anne, 29200 Brest (FR)
(74) Mandataire: IP Trust
(86) Numéro de dépôt international: PCT/FR2016/052053
(87) Numéro de publication internationale: WO 2017/025688

(56) Documents cités:
- WO-A1-2007/108827
- WO-A1-2009/072885
- WO-A1-2011/152706
- WO-A1-2014/099795
- US-A1- 2014 024 581

## Description

### Domaine de l'invention

La présente invention se rapporte au domaine des compositions nutritionnelles à des fins médicales spéciales à forte densité énergétique et enrichie en protéines. Ces compositions nutritionnelles sont à destination des personnes âgées, malades, affaiblies ou en état de dénutrition liée à la maladie. Ces compositions sont utilisables en source principale d'alimentation ou en complément.

La présente invention porte plus précisément sur une composition nutritionnelle buvable hyperénergétique et fortement enrichie en protéines, stable dans le temps, unidose et prête à l'emploi. La composition selon l'invention est destinée à des adultes et peut être utilisée en source principale d'alimentation ou en complément.

### Contexte général de l'invention

Le corps humain est un organisme complexe. Le maintien des fonctions vitales nécessite de l'énergie qui est apportée par l'alimentation.

L'alimentation apporte de l'énergie quantifiable sous forme de kilojoules ou de kilocalories.

Le bon fonctionnement du corps nécessite une alimentation suffisante et équilibrée. L'énergie doit être apportée par des protéines, des sucres et des matières grasses. Les protéines sont indispensables à l'activité musculaire, les matières grasses permettent de stocker de l'énergie libérable en fonction des besoins du corps, et les sucres apportent une source immédiatement disponible d'énergie. Ces sources caloriques sont donc complémentaires. Elles doivent être complétées par des apports en vitamines et minéraux qui interviennent dans l'équilibre physiologique des différentes fonctions vitales du corps.

Cet équilibre peut être rompu en cas de malnutrition due par exemple à un trouble de l'alimentation (anorexie...), ou de dénutrition conséquente à une situation pathologique ou chez les personnes âgées qui ne s'alimentent plus correctement de façon autonome.

Les besoins nutritionnels évoluent au cours de la vie. Par exemple, les personnes âgées ont des besoins réduits en lipides, dus à une diminution d'activité et à un ralentissement du renouvellement cellulaire.

Certaines personnes, par exemple à cause de la maladie, ne sont plus capables de s'alimenter correctement, voire même de s'alimenter complètement. Il est donc nécessaire de mettre en place une alimentation de supplémentation ou de substitution afin de subvenir à leurs besoins nutritionnels.

Lorsque le tube digestif est toujours fonctionnel, la nutrition entérale est privilégiée. Elle peut se faire avec des compositions nutritionnelles adaptées en terme de profil nutritionnel, de viscosité ou encore de volume.

A titre d'exemple, certains patients ne peuvent pas ingérer de volumes importants d'aliments. Il s'agit par exemple des patients cachectiques en lien ou non avec une pathologie, par exemple le syndrome d'immunodéficience acquise, un cancer, des maladies respiratoires ou infectieuses, ou des traumatismes.

### Etat de la technique

Il existe des produits hyperprotéinés et hyperénergétiques dont la concentration protéique est au moins égale ou supérieure à 10 grammes (g) par 100 millilitres (mL) de composition. Il s'agit notamment :
- du FORTIMEL PROTEIN commercialisé par NUTRICIA. Il comprend 240 kcal par 100 mL et 14,4 g de protéines par 100 mL de composition
- du RENUTRYL BOOSTER commercialisé par NESTLE HEALTH SCIENCE. Ce produit comprend 200 kilocalories (kcal) par 100 mL et 10 g de protéines par 100 mL de composition.

La demande de brevet WO2011/152706 divulgue une composition de nutrition orale épaissie. Plus précisément, la composition nutritionnelle entérale liquide présente une densité énergétique entre 1,0 et 4,0 kcal/ml, une viscosité entre 150 et 1800 mPa.s, mesurée à taux de cisaillement de 50/seconde à 20°C, comprend des carbohydrates digestibles et de la graisse. La composition comprend en outre au moins un parmi (a1) entre 8-20 g de protéines par 100 ml de la composition, la caséine micellaire représentant au moins 50% en poids de la teneur totale en protéines de la composition, ou (a2) entre 16 -45% en énergie de protéines, la caséine micellaire représentant au moins 50% de la teneur calorique des protéines ; et (b) des fibres anioniques capables de séquestrer le calcium, et (c) du carraghénane entre 0,015 et 0,25 g par 100 ml de composition. L'invention concerne également son utilisation pour la prévention/le traitement de la dysphagie, et/ou le traitement/la prévention de la malnutrition ou de la sous-nutrition associée à la dysphagie.

La demande de brevet WO2014/099795 divulgue une composition de nutrition orale à faible viscosité et à haute densité énergétique. La composition selon ce brevet comporte entre 8 et 27 g de protéines par 100 mL de composition, une densité énergétique comprise entre 200 et 300 kcal par 100 mL de composition, une viscosité de 45 à 145 cps et une quantité combinée de graisses et de protéines comprise entre 8 et 27 g par 100 mL de composition.

La demande de brevet WO2007/108827 divulgue un supplément nutritionnel comprenant une source protéique de type MPI ou protéines de colza, mais sans caséinates, la quantité de protéines étant comprise entre 6,75 et 12,65 g de protéines par 100 mL de composition, une densité énergétique de 2,25 à 3,25 calorie par mL et une viscosité inférieure à 120 cps.

### Inconvénients de l'art antérieur

Les compositions de nutrition entérale buvable avec un profil nutritionnel complet ou quasi complet plafonnent à une quantité de protéines d'environ 14 g par 100 mL de composition ainsi qu'une densité énergétique de 240 kcal par 100 mL.

Il existe un besoin de densifier le profil nutritionnel de ces compositions pour réduire le volume ingéré tout en préservant une fluidité suffisante à la composition pour qu'elle soit buvable. Or augmenter les nutriments essentiels tels que les protéines, les lipides et les sucres entraînent une augmentation de la viscosité, notamment par augmentation de l'extrait sec, ce qui rend la formulation et la mise en oeuvre industrielle particulièrement complexes. Plus l'extrait sec est élevé, moins il y a d'eau disponible pour disperser les ingrédients sous forme de poudre. Ainsi lorsque l'extrait sec est particulièrement élevé, des problèmes d'incorporation, de dispersion, de solubilisation, d'hydratation des ingrédients peuvent apparaître, se traduisant entre autre par une viscosité trop importante, des problèmes de stabilité et de propriétés organoleptiques altérées. Des problèmes de stérilisation peuvent également être rencontrés.

Il est particulièrement difficile de formuler une composition de nutrition entérale encore plus riche en énergie avec une quantité supérieure à 14 g de protéines par 100 mL de composition tout en conservant une viscosité suffisamment faible pour pouvoir être buvable. Pour être buvable, la viscosité de la composition doit être inférieure à 600 mPa.s quand mesurée à 100 s⁻¹ avec un viscosimètre rotatif à 20°C.

### Solution apportée par l'invention

L'invention se propose de remédier aux inconvénients de l'art antérieur en proposant une composition nutritionnelle entérale buvable thermostérilisée prête à l'emploi comprenant :
- entre 14 g et 20 g de protéines par 100 mL de composition
- une densité énergétique comprise entre 1046 et 1465 kJ (250 à 350 kcal) par 100 mL de composition
- une quantité combinée de lipides, glucides et protéines comprise entre 45 et 72 g par 100 mL de composition
- un extrait sec compris entre 40 et 65% en poids de la composition
- une quantité d'eau n'excédant pas 65% en poids de la composition
caractérisée en ce qu'au moins 60% des glucides en poids des glucides totaux sont apportés par un sirop de glucose présentant un DE compris entre 20 et 40.

Avantageusement, la quantité combinée de lipides, glucides et protéines est comprise entre 45 et 65 g par 100 mL de composition.

Avantageusement, l'extrait sec est compris entre 40 et 60 % en poids de la composition.

Avantageusement, les protéines fournissent au moins 20% des apports énergétiques totaux.

Les glucides fournissent entre 20 et 50% des apports énergétiques totaux.

Les lipides fournissent entre 30 et 65% des apports énergétiques totaux.

Selon un mode de réalisation, la viscosité de la composition après thermostérilisation est comprise entre 100 et 600 mPa.s quand mesurée à 20°C à 100s⁻¹ avec un viscosimètre rotatif.

Selon un autre mode de réalisation, la viscosité de la composition après thermostérilisation est comprise entre 100 à 450 mPa.s quand mesurée à 20°C à 100s⁻¹ avec un viscosimètre rotatif.

Selon un mode de réalisation, la densité énergétique de la composition est préférentiellement comprise entre 1046 et 1256 kJ (250 et 300 kcal) par 100 mL de composition.

Avantageusement, ladite protéine comprend au moins une source de caséine et des protéines sériques.

La source de caséine est choisie parmi la liste d'ingrédients consistant en des MPI, des MPC, des MCI, des protéines de lait concentré liquide, du lait écrémé, du lait écrémé concentré, des caséinates de sodium, des caséinates de potassium, des caséinates de calcium ou un mélange d'au moins deux parmi ceux-ci.

Avantageusement, la composition comprend moins de 10% en poids de protéines sériques par rapport au poids de la protéine totale.

Selon un mode de réalisation, la composition nutritionnelle entérale buvable comprend :
- entre 14 g et 14,5 g de protéines par 100 mL de composition
- environ 1046 kJ (250 kcal) par 100 mL de composition
- une quantité combinée de lipides, glucides et protéines comprise entre 45 et 46 g par 100 mL de composition
- un extrait sec compris entre 40 et 44,5 % en poids de la composition
- une quantité d'eau inférieure à 60% en poids de la composition
- une viscosité inférieure à 450 mPa.s quand mesurée à 20°C à 100s-1 avec un viscosimètre rotatif.

Avantageusement, la composition nutritionnelle entérale buvable est pour nourrir une personne âgée, une personne dénutrie, une personne en convalescence ou atteinte de maladie chronique.

### Description

### Définitions :

Par « buvable » selon la présente invention, il est compris que la composition nutritionnelle est suffisamment fluide pour être bue dans un verre ou à la paille. Elle ne nécessite pas une administration à la cuillère. La composition de la présente invention n'est pas destinée à une administration par sonde. La viscosité d'une composition « buvable » selon la présente invention est inférieure à 600 mPa.s quand mesurée à 100 s⁻¹ à 20°C avec un viscosimètre rotatif. Le viscosimètre rotatif est du type cup and bob, par exemple un DIN coaxial cylinder. Préférentiellement, la viscosité est comprise entre 100 et 600 mPa.s, plus préférentiellement entre 100 et 450 mPa.s.

Par « thermostérilisée », il est compris que la composition avant son conditionnement est stérilisée par les techniques bien connues de l'Homme du métier comme la pasteurisation et/ou la stérilisation. Préférentiellement, la composition est thermostérilisée avant conditionnement.

Par « prête à l'emploi », il est compris que la composition thermostérilisée est conditionnée en bouteille, pack, briquette ou tout autre emballage. La composition est conditionnée en format unidose, généralement de 50, 100, 125, 150, 200, 250 ou 300 mL, préférentiellement de 125 mL. La composition ainsi conditionnée est de longue conservation, c'est-à-dire que la durée limite d'utilisation optimale (DLUO) est d'au moins 6 mois, préférentiellement d'au moins 9 mois, encore plus préférentiellement d'au moins 12 mois.

Il est compris par « au moins » que l'intervalle ouvert inclut la valeur de départ de l'intervalle, ou la valeur maximale dans l'intervalle dans le cas de « inférieur à ».

### Les protéines :

La composition nutritionnelle entérale buvable comprend entre 14 et 20 grammes de protéines par 100 mL de composition. Préférentiellement, la composition comprend entre 14 et 19 g de protéines par 100 mL, encore plus préférentiellement entre 14 et 18 g de protéines par 100 mL de composition. La protéine comprend au moins une source de caséine et des protéines sériques (petit-lait). La protéine peut comprendre une autre source de protéine animale ou végétale. Préférentiellement, la composition comprend uniquement une source protéique laitière, apportée par du lait de vache ou ses dérivés.

La caséine est apportée par différents ingrédients que sont non limitativement des isolats de protéines de lait (MPI pour Milk Protein Isolate), des concentrés de protéines de lait (MPC pour Milk Protein Concentrate), des isolats de caséines micellaires (MCI), des protéines de lait concentré liquide, du lait écrémé, du lait écrémé concentré, des caséinates de sodium, des caséinates de potassium, des caséinates de calcium ou un mélange d'au moins deux parmi ceux-ci. Dans un mode particulier néanmoins préféré de réalisation, la protéine ne comprend pas d'ingrédient caséinate de calcium.

La composition nutritionnelle entérale buvable comprend moins de 10% en poids de protéines sériques par rapport au poids de la protéine totale. Les protéines sériques, c'est à dire les protéines de petit-lait, peuvent être apportées par les protéines totales de lait - sources de caséines - mais aussi par des isolats de protéines sériques et/ou des concentrés de protéines sériques. Dans un mode particulier de réalisation, les protéines sériques sont apportées uniquement par les protéines totales de lait, c'est à dire la ou les sources de caséines. Préférentiellement la composition comprend moins de 8% de protéines sériques par rapport au poids de la protéine totale, encore plus préférentiellement moins de 7%, de façon encore plus préférée moins de 6%.

Dans un mode de réalisation, les protéines apportent au moins 20% des apports énergétiques totaux (AET). Dans un mode préféré de réalisation, les protéines apportent entre 20 et 50% des AET.

### Les glucides :

Avantageusement, la composition nutritionnelle entérale buvable comprend des glucides. Les glucides fournissent entre 20 et 50% des apports énergétiques totaux.

Les glucides peuvent être des glucides simples ou complexes ou un mélange parmi ceux-ci. Les glucides peuvent comprendre du glucose, du fructose, du sucrose, du lactose, du trehalose, du palatinose, du sirop de maïs, du malt, du maltose, de l'isomaltose, de l'amidon de maïs partiellement hydrolysé, des maltodextrines, du sirop de glucose, du sucre, des oligosaccharides, des polysaccharides, des édulcorants ou un mélange parmi ceux-ci. Les glucides sont choisis pour limiter leur impact sur la viscosité de la composition nutritionnelle ainsi que pour éviter un goût sucré excessif, des réactions de Maillard trop importantes et une osmolarité trop élevée.

Au moins 60% des glucides en poids des glucides totaux sont apportés par un sirop de glucose présentant un DE (équivalent dextrose) compris entre 20 et 40. Préférentiellement, au moins 70% des glucides en poids des glucides totaux sont apportés par un sirop de glucose présentant un DE (équivalent dextrose) compris entre 20 et 40. Un sirop de glucose avec un DE supérieur à 40 entraînerait un goût trop sucré. A l'inverse, un sirop de glucose avec un DE trop faible entraînerait une augmentation trop importante de la viscosité du produit fini. C'est pourquoi les maltodextrines ayant un DE inférieur à 20 sont évitées pour la formulation de la composition nutritionnelle entérale selon l'invention. Un juste équilibre entre viscosité et goût sucré a donc été trouvé de façon étonnante par la demanderesse.

Dans un mode particulier de réalisation, le sirop de glucose est couplé à une autre source de glucide.

Au moins 60% des glucides en poids des glucides totaux sont apportés par un sirop de glucose présentant un DE (équivalent dextrose) compris entre 20 et 40, préférentiellement entre 20 et 35, encore plus préférentiellement entre 25 et 35.

### Les lipides :

Avantageusement, la composition nutritionnelle entérale buvable comporte en outre des lipides fournissant entre 30 et 65% des apports énergétiques totaux.

La composition selon l'invention comprend entre 8 et 30 g de lipides par 100 mL de composition.

Les lipides utilisés dans la composition sont des lipides alimentaires d'origines animales ou végétales. Dans un mode de réalisation de l'invention, les huiles végétales telles que les huiles de colza, de soja, de palme, de maïs ou de tournesol ou un mélange parmi celles-ci, sont préférées par leur plus faible teneur en cholestérol et/ou en acides gras saturés par rapport aux graisses d'origines animales.

La quantité combinée de lipides, glucides et protéines de la composition selon la présente invention est comprise entre 45 et 72 g par 100 mL de composition. Préférentiellement, la quantité combinée de lipides, glucides et protéines de la composition est comprise entre 45 et 65 g par 100 mL de composition, encore plus préférentiellement entre 45 et 50 g par 100 mL de composition.

### Les vitamines et minéraux :

La composition nutritionnelle selon l'invention comprend une grande variété de minéraux et de vitamines pour être au plus proche des apports journaliers recommandés. Dans un mode de réalisation de l'invention, la composition nutritionnelle présente un profil nutritionnel en terme de vitamines et de minéraux quasi complet à complet selon la réglementation européenne des aliments diététiques destinés à des fins médicales spéciales.

Les vitamines et minéraux sont majoritairement apportés au minimum à hauteur de 15% des apports journaliers recommandés définis par la législation européenne.

### Le procédé de préparation et le conditionnement :

La composition selon la présente invention peut être obtenue en préparant une phase aqueuse dans laquelle sont incorporés successivement en une ou plusieurs étapes l'eau, les glucides, les protéines, les minéraux, les vitamines, les colorants, les arômes et les éventuels autres additifs. L'eau est préalablement chauffée entre 40 et 60°C. Puis une phase grasse comportant des huiles et/ou des émulsifiants est également chauffée et incorporée dans la phase aqueuse.

Une phase de refroidissement et d'équilibrage est appliquée puis la composition est stérilisée avant conditionnement aseptique. Une homogénéisation peut être pratiquée avant ou après stérilisation.

La stérilisation est faite par chauffage selon les procédés habituels d'Ultra Haute Température.

### Exemples :

L'invention sera mieux comprise à la lumière d'exemples non limitatifs de réalisation. Les présents exemples portent sur des boissons hyperprotéinées et hypercaloriques, nutritionnellement quasi complètes à complètes. Les compositions peuvent être utilisées comme seule source d'alimentation ou en complément. Ce sont des suppléments oraux appartenant à la catégorie des aliments diététiques destinés à des fins médicales spéciales, destinés à couvrir les besoins nutritionnels en cas de dénutrition liée à la maladie. Ils répondent à la législation en vigueur sur les produits de nutrition médicale.

Les compositions dans les exemples sont aromatisées à la vanille. Bien entendu, elles peuvent être aromatisées à n'importe quel autre parfum comme chocolat, café, fraise, framboise, citron...

Les compositions nutritionnelles sont ici stérilisées UHT (Ultra Haute Température) permettant d'avoir une valeur stérilisatrice de 15 minutes.

Les compositions sont prêtes à l'emploi et conditionnées dans des bouteilles adaptées de 125 mL, correspondant à une portion.

Ces compositions sont buvables à la paille ou au verre.

Des compositions à 14 g (exemple A), 14,4 g (exemple D), 16 g (exemple B) et 18 g (exemple C) de protéines par 100 mL de composition ont été réalisées. Elles présentent une viscosité inférieure à 600 mPa.s, voire inférieure à 450 mPa.s quand mesurée à 20°C à 100 s⁻¹ avec un viscosimètre rotatif. Elles présentent une bonne stabilité dans le temps. Aucune précipitation, crémage ni altération du goût ou de la couleur n'ont été observés dans le temps. La table 1 ci-dessous récapitule les principaux éléments de ces exemples.

**Table 1. Profil des exemples A, B, C et D selon l'invention**

| | Unité | A | B | C | D |
|---|---|---|---|---|---|
| Energie | kcal/100 mL | 250 | 250 | 250 | 250 |
| Protéines | g/100 mL | 14 | 16 | 18 | 14,4 |
| | % AET | 22 | 26 | 29 | 23 |
| - dont caséines | % poids des protéines | 94 | 94 | 94 | 95 |
| - dont protéines sériques | % poids des protéines | 6 | 6 | 6 | 5 |
| Lipides | g/100 mL | 9,9 | 13,3 | 13,3 | 13,3 |
| | %AET | 36 | 48 | 48 | 48 |
| Glucides | g/100 mL | 26 | 16,5 | 14,5 | 18 |
| | %AET | 42 | 26 | 23 | 29 |
| | DE du sirop de glucose | 29 | 29 | 29 | 29 |
| Eau | % en poids de composition | 55,5 | 57,8 | 57,8 | 56,3 |
| Viscosité | mPa.s à 100s⁻¹ à 20°C | 340 | <600 | <600 | 303 |
| Extrait sec | % en poids de composition | 44,5 | 42,2 | 42,2 | 43,7 |
| densité | g/mL | 1,145 | 1,1 | 1,1 | 1.1 |

## Revendications

1. Composition nutritionnelle entérale buvable thermostérilisée prête à l'emploi comprenant :
- entre 14 g et 20 g de protéines par 100 mL de composition
- une densité énergétique comprise entre 1046 et 1465 kJ (250 à 350 kcal) par 100 mL de composition
- une quantité combinée de lipides, glucides et protéines comprise entre 45 et 72 g par 100 mL de composition
- un extrait sec compris entre 40 et 65% en poids de la composition
- une quantité d'eau n'excédant pas 65% en poids de la composition
**caractérisée en ce qu'**au moins 60% des glucides en poids des glucides totaux sont apportés par un sirop de glucose présentant un DE compris entre 20 et 40.

2. Composition nutritionnelle entérale buvable selon la revendication 1 **caractérisée en ce qu'**au moins 70% des glucides en poids des glucides totaux sont apportés par un sirop de glucose présentant un DE compris entre 20 et 40

3. Composition nutritionnelle entérale buvable selon l'une des revendications précédentes **caractérisée en ce que** la quantité combinée de lipides, glucides et protéines est comprise entre 45 et 65 g par 100 mL de composition.

4. Composition nutritionnelle entérale buvable selon l'une des revendications précédentes **caractérisée en ce que** l'extrait sec est compris entre 40 et 60 % en poids de la composition.

5. Composition nutritionnelle entérale buvable selon l'une quelconque des revendications 1 à 3 **caractérisée en ce que** les protéines fournissent au moins 20% des apports énergétiques totaux.

6. Composition nutritionnelle entérale buvable selon l'une quelconque des revendications 1 à 4 **caractérisée en ce que** les glucides fournissent entre 20 et 50% des apports énergétiques totaux.

7. Composition nutritionnelle entérale buvable selon l'une quelconque des revendications 1 à 5 **caractérisée en ce que** les lipides fournissent entre 30 et 65% des apports énergétiques totaux.

8. Composition nutritionnelle entérale buvable selon l'une quelconque des revendications 1 à 6 **caractérisée en ce que** la viscosité de la composition après thermostérilisation est comprise entre 100 et 600 mPa.s quand mesurée à 20°C à 100s⁻¹ avec un viscosimètre rotatif.

9. Composition nutritionnelle entérale buvable selon l'une quelconque des revendications 1 à 6 **caractérisée en ce que** la viscosité de la composition après thermostérilisation est comprise entre 100 à 450 mPa.s quand mesurée à 20°C à 100s⁻¹ avec un viscosimètre rotatif.

10. Composition nutritionnelle entérale buvable selon l'une quelconque des revendications 1 à 8 **caractérisée en ce que** la densité énergétique de la composition est préférentiellement comprise entre 1046 et 1256 kJ (250 et 300 kcal) par 100 mL de composition.

11. Composition nutritionnelle entérale buvable selon l'une quelconque des revendications 1 à 9 **caractérisée en ce que** ladite protéine comprend au moins une source de caséine et des protéines sériques.

12. Composition nutritionnelle entérale buvable selon l'une quelconque des revendications 1 à 10 **caractérisée en ce que** la source de caséine est choisie parmi la liste d'ingrédients consistant en des MPI, des MPC, des MCI, des protéines de lait concentré liquide, du lait écrémé, du lait écrémé concentré, des caséinates de sodium, des caséinates de potassium, des caséinates de calcium ou un mélange d'au moins deux parmi ceux-ci.

13. Composition nutritionnelle entérale buvable selon l'une quelconque des revendications 1 à 11 **caractérisée en ce que** la composition comprend moins de 10% en poids de protéines sériques par rapport au poids de la protéine totale

14. Composition nutritionnelle entérale buvable selon la revendication 1 **caractérisé en ce qu'**elle comprend
- entre 14 g et 14,5 g de protéines par 100 mL de composition
- environ 1046 kJ (250 kcal) par 100 mL de composition
- une quantité combinée de lipides, glucides et protéines comprise entre 45 et 46 g par 100 mL de composition
- un extrait sec compris entre 40 et 44,5 % en poids de la composition
- une quantité d'eau inférieure à 60% en poids de la composition
- une viscosité inférieure à 450 mPa.s quand mesurée à 20°C à 100s⁻¹ avec un viscosimètre rotatif

15. Composition nutritionnelle entérale buvable selon l'une quelconque des revendications 1 à 13 pour nourrir une personne âgée, une personne dénutrie, une personne en convalescence ou atteinte de maladie chronique

## Patentansprüche

1. Enterale, trinkbare, thermosterilisierte und gebrauchsfertige Nährstoffzusammensetzung, welche folgendes umfasst:
- 14 g bis 20 g Proteine pro 100 ml der Zusammensetzung
- eine Energiedichte zwischen 1046 und 1465 Kj (250 bis 350 kcal) pro 100 ml der Zusammensetzung
- 45 und 72 g einer kombinierten Menge an Fetten, Kohlenhydraten und Proteinen pro 100 ml der Zusammensetzung
- ein Trockenextrakt mit einem Massenanteil an der Zusammensetzung von 40 bis 65 %
- eine Wassermenge, die nicht über einen Massenanteil an der Zusammensetzung von 65 % hinausgeht,
- **dadurch gekennzeichnet, dass** zumindest ein Kohlenhydratmassenanteil von 60 % des Gesamtkohlenhydratmassenanteils durch einen Glukosesirup bereitgestellt wird, der eine Energiedichte zwischen 20 und 40 aufweist.

2. Enterale, trinkbare Nährstoffzusammensetzung nach Anspruch 1, **dadurch gekennzeichnet, dass** ein Kohlenhydratmassenanteil von zumindest 70 % des Gesamtkohlenhydratmassenanteils durch einen Glukosesirup bereitgestellt wird, der eine Energiedichte zwischen 20 und 40 aufweist.

3. Enterale, trinkbare Nährstoffzusammensetzung nach einem der vorhergehenden Ansprüche, **dadurch gekennzeichnet, dass** die kombinierte Menge an Fetten, Kohlenhydraten und Proteinen zwischen 45 und 65 g pro 100 ml der Zusammensetzung beträgt.

4. Enterale, trinkbare Nährstoffzusammensetzung nach einem der vorhergehenden Ansprüche, **dadurch gekennzeichnet, dass** der Massenanteil des Trockenextrakts 40 bis 60 % der Zusammensetzung beträgt.

5. Enterale, trinkbare Nährstoffzusammensetzung nach einem der Ansprüche 1 bis 3, **dadurch gekennzeichnet, dass** die Proteine zumindest 20 % der Gesamtenergiezufuhr bereitstellen.

6. Enterale, trinkbare Nährstoffzusammensetzung nach einem der Ansprüche 1 bis 4, **dadurch gekennzeichnet, dass** die Kohlenhydrate 20 bis 50 % der Gesamtenergiezufuhr bereitstellen.

7. Enterale, trinkbare Nährstoffzusammensetzung nach einem der Ansprüche 1 bis 5, **dadurch gekennzeichnet, dass** die Fette 30 bis 65 % der Gesamtenergiezufuhr bereitstellen.

8. Enterale, trinkbare Nährstoffzusammensetzung nach einem der Ansprüche 1 bis 6, **dadurch gekennzeichnet, dass** die Viskosität der Zusammensetzung nach der Thermosterilisierung 100 bis 600 mPa.s beträgt, gemessen mit einem Rotationsviskosimeter bei 20 °C und 100S⁻¹.

9. Enterale, trinkbare Nährstoffzusammensetzung nach einem der Ansprüche 1 bis 6, **dadurch gekennzeichnet, dass** die Viskosität der Zusammensetzung nach der Thermosterilisierung 100 bis 450 mPa.s beträgt, gemessen mit einem Rotationsviskosimeter bei 20 °C und 100S⁻¹.

10. Enterale, trinkbare Nährstoffzusammensetzung nach einem der Ansprüche 1 bis 8, **dadurch gekennzeichnet, dass** die Energiedichte der Zusammensetzung vorzugsweise 1046 bis 1256 kJ (250 und 300 kcal) pro 100 ml der Zusammensetzung beträgt.

11. Enterale, trinkbare Nährstoffzusammensetzung nach einem der Ansprüche 1 bis 9, **dadurch gekennzeichnet, dass** besagtes Protein zumindest eine Kaseinquelle und Serumproteine umfasst.

12. Enterale, trinkbare Nährstoffzusammensetzung nach einem der Ansprüche 1 bis 10, **dadurch gekennzeichnet, dass** die Kaseinquelle ausgewählt wird aus der Liste der Inhaltsstoffe bestehend aus Milchproteinisolaten, Milcheiweißkonzentraten, Micellar-Casein-Isolaten, Proteinen flüssiger Kondensmilch, Magermilch, Kondensmagermilch, Natriumkaseinaten, Kaliumkaseinaten oder Kalziumkaseinaten oder einer Mischung zumindest zweier dieser Inhaltsstoffe.

13. Enterale, trinkbare Nährstoffzusammensetzung nach einem der Ansprüche 1 bis 11, **dadurch gekennzeichnet, dass** der Massenanteil der Serumproteine am Gesamtmassenanteil der Proteine zumindest 10 % beträgt.

14. Enterale, trinkbare Nährstoffzusammensetzung nach Anspruch 1, **dadurch gekennzeichnet, dass** sie folgendes umfasst:
- 14 g bis 14,5 g Proteine pro 100 ml der Zusammensetzung,
- ungefähr 1046 kJ (250 kcal) pro 100 ml der Zusammensetzung,
- 45 bis 46 g pro 100 ml der Zusammensetzung
- eine kombinierte Menge an Fetten, Kohlenhydraten und Proteinen
- Trockenextrakt mit einem Massenanteil von 40 bis 44,5 % der Zusammensetzung
- eine Wassermenge mit einem Massenanteil kleiner 60 % der Zusammensetzung
- eine Viskosität kleiner 450 mPa.s, gemessen mit einem Rotationsviskosimeter bei 20 °C und 100S⁻¹.

15. Enterale, trinkbare Nährstoffzusammensetzung nach einem der Ansprüche 1 bis 13, um eine ältere Person, eine unterernährte Person, eine Person im Rekonvaleszenzstadium oder eine chronisch kranke Person zu ernähren.

## Claims

1. A ready-to-use, heat-sterilized, oral enteral nutritional composition comprising:
- from 14g to 20g of proteins per 100ml of composition
- an energy density ranging from 1,046 to 1,465kJ (250-350 kcal) per 100ml of composition
- a combined amount of lipids, carbohydrates and proteins ranging from 45 to 72g per 100ml of composition
- a solids content ranging from 40 to 65% by weight of the composition
- an amount of water not exceeding 65% by weight of the composition
**characterized in that** at least 60% of the carbohydrates by weight based on the total carbohydrate content are provided by a glucose syrup having a DE between 20 and 40.

2. An oral enteral nutritional composition according to claim 1, **characterized in that** at least 70% of the carbohydrates by weight based on the total carbohydrate content are provided by a glucose syrup having a DE between 20 and 40.

3. An oral enteral nutritional composition according to one of the preceding claims, **characterized in that** the combined amount of lipids, carbohydrates and proteins ranges from 45 to 65g per 100ml of composition.

4. An oral enteral nutritional composition according to one of the preceding claims, **characterized in that** the solids content ranges from 40 to 60% by weight of the composition.

5. An oral enteral nutritional composition according to any one of claims 1 to 3, **characterized in that** the proteins provide at least 20% of the total energy intake.

6. An oral enteral nutritional composition according to any one of claims 1 to 4, **characterized in that** the carbohydrates provide from 20 to 50% of the total energy intake.

7. An oral enteral nutritional composition according to any one of claims 1 to 5, **characterized in that** the lipids provide from 30 to 65% of the total energy intake.

8. An oral enteral nutritional composition according to any one of claims 1 to 6, **characterized in that** the viscosity of the composition after heat-sterilization ranges from 100 to 600mPa.s when measured at 20°C at 100s⁻¹ using a rotary viscometer.

9. An oral enteral nutritional composition according to any one of claims 1 to 6, **characterized in that** the viscosity of the composition after heat-sterilization ranges from 100 to 450mPa.s when measured at 20°C at 100s⁻¹ using a rotary viscometer.

10. An oral nutritional enteral composition according to any one of claims 1 to 8, **characterized in that** the energy density of the composition preferably ranges from 1,046 to 1,256kJ (250 to 300kcal) per 100mL of composition.

11. An oral enteral nutritional composition according to any one of claims 1 to 9, **characterized in that** said protein comprises at least one source of casein and serum proteins.

12. An oral enteral nutritional composition according to any one of claims 1 to 10, **characterized in that** the source of casein is selected from the list of ingredients consisting of MPIs, MPCs, MCIs, liquid concentrate milk proteins, skim milk, concentrate skim milk, sodium caseinates, potassium caseinates, calcium caseinates or a mixture of at least two thereof.

13. An oral enteral nutritional composition according to any one of claims 1 to 11, **characterized in that** the composition comprises less than 10% by weight of serum proteins based on the weight of the total protein.

14. An oral enteral nutritional composition according to claim 1, **characterized in that** it comprises:
- from 14g to 14.5g of proteins per 100mL of composition
- about 1,046kJ (250kcal) per 100ml of composition
- a combined amount of lipids, carbohydrates and proteins ranging from 45 to 46g per 100ml of composition
- a solids content ranging from 40 to 44.5% by weight of the composition
- an amount of water not exceeding 60% by weight of the composition
- a viscosity not exceeding 450mPa.s when measured at 20°C at 100s⁻¹ using a rotary viscometer.

15. An oral enteral nutritional composition according to any one of claims 1 to 13, used to feed an elderly person, an under-nourished person, a convalescent person or a person suffering from a chronic disease.
